# EUROPEAN PATENT APPLICATION

(11) **EP 4 840 558 A1**
(43) Date of publication of application: **18.11.2026**
(21) Application number: 25882131.3
(22) Date of filing: 09.06.2025
(51) Int. Cl.: B21J 5/12, B21J 5/02, B21J 13/02, B21K 1/54, B23P 23/04, F16H 25/22, F16H 25/24

(54) **METHOD FOR MANUFACTURING SCREW SHAFT FOR BALL SCREW**

(30) Priority: 22.10.2024 JP 2024185745
(71) Applicant: NSK Ltd., Tokyo 141-8560 (JP)
(72) Inventor: NAKAMURA, Seiji, Fujisawa-shi, Kanagawa 251-8501 (JP); INOUE, Shunya, Fujisawa-shi, Kanagawa 251-8501 (JP); SATO, Kanta, Fujisawa-shi, Kanagawa 251-8501 (JP)
(74) Representative: Müller-Boré & Partner Patentanwälte PartG mbB
(86) International application number: PCT/JP2025/020765
(87) International publication number: WO 2026/088497

(57) **Abstract**

Provided is a method of manufacturing a screw shaft for a ball screw having a spiral groove along which a plurality of rolling elements roll, and a circulation groove configured to return the rolling elements from one end to the other end of the spiral groove, the method including a circulation groove forming process, and a spiral groove forming process. In the circulation groove forming process, the circulation groove is formed on an outer circumferential surface of a blank (8) by moving a punch (31) on which a convex portion (32) is formed corresponding to a concave portion of the circulation groove inward in the radial direction without moving the punch (31) in the axial direction relative to the blank (8), and pressing the convex portion (32) against the outer circumferential surface of the blank (8).

## Description

### TECHNICAL FIELD

The present invention relates to a method for manufacturing a screw shaft for a ball screw.

Priority is claimed on Japanese Patent Application No. 2024-185745, filed October 22, 2024, the content of which is incorporated herein by reference.

### BACKGROUND ART

In the related art, in a ball screw having a nut, a screw shaft, and a plurality of rolling elements, one known circuit structure for circulating a plurality of rolling elements is one that includes a circulation groove for a return route (return raceway) provided on an outer circumferential surface of a screw shaft, separate from a groove for a main route (main raceway). In such a ball screw, various methods have been proposed for directly forming the circulation groove on the outer circumferential surface of the screw shaft.

For example, Patent Document 1 discloses a method of manufacturing a screw shaft for a ball screw having a spiral groove along which a plurality of rolling elements roll, and a circulation groove configured to allow the rolling elements to return and circulate from an end point to a start point of the spiral groove, and the circulation groove is formed in an outer circumferential surface of the screw shaft through cutting using an end mill.

### Citation List

### Patent Document

Patent Document 1: Japanese Patent No. 6693264

### SUMMARY OF INVENTION

### Technical Problem

However, in the technology disclosed in Patent Document 1, since the plurality of circulation grooves are formed by cutting, the processing time tends to be long. As a result, there was a risk that the manufacturing costs associated with screw shafts would increase. In addition, since the cutting is performed using the end mill, when the processing position coincides with the rotation axis of the end mill, the rotation speed at the rotation center of the end mill becomes slow, reducing machinability. Accordingly, there was a risk that processability and processing accuracy of the screw shaft would be reduced.

Accordingly, in the related art disclosed in Patent Document 1, in the method for manufacturing a screw shaft for a ball screw, in which the circulation groove is integrally formed on the screw shaft, there was room for improvement in terms of improving processability and processing accuracy.

Here, the present invention is directed to providing a method for manufacturing a screw shaft for a ball screw capable of improving processability and processing accuracy when forming a circulation groove in a screw shaft compared to the prior art.

### Solution to Problem

In order to achieve the aforementioned objects, the present invention proposes the following means.

A method for manufacturing a screw shaft for a ball screw according to a first aspect of the present invention is a method of manufacturing a screw shaft for a ball screw having a spiral groove along which a plurality of rolling elements roll, and a circulation groove configured to return the rolling elements from one end to the other end of the spiral groove, the method including: a circulation groove forming process of forming the circulation groove on an outer circumferential surface of a blank of the screw shaft by moving a first mold, on which a convex portion corresponding to a concave portion of the circulation groove is formed, from outside to inside the blank in a radial direction; and a spiral groove forming process of forming the spiral groove on the outer circumferential surface of the blank by removal processing, in the circulation groove forming process, the circulation groove being formed by moving the first mold inward in the radial direction without moving the first mold in the axial direction to press the outer circumferential surface of the blank, and pressing the convex portion against the outer circumferential surface of the blank.

### Advantageous Effects of Invention

According to the method for manufacturing a screw shaft for a ball screw of the present invention, it is possible to provide a method for manufacturing a screw shaft for a ball screw capable of improving processability and processing accuracy when forming a circulation groove in a screw shaft compared to the prior art.

### BRIEF DESCRIPTION OF DRAWINGS

[FIG. 1] A schematic cross-sectional view showing a ball screw according to a first embodiment.
[FIG. 2] A flowchart showing a flow of a method for manufacturing a screw shaft for a ball screw according to the first embodiment.
[FIG. 3] A cross-sectional view of a blank of a screw shaft according to the first embodiment.
[FIG. 4] A cross-sectional view showing outlines of a circulation groove forming process in the method of manufacturing a screw shaft.
[FIG. 5] A cross-sectional view showing outlines of the circulation groove forming process in the method of manufacturing a screw shaft.
[FIG. 6] A perspective view showing outlines of the circulation groove forming process in the method of manufacturing a screw shaft.
[FIG. 7] A cross-sectional view showing outlines of a mold removal process in the method of manufacturing a screw shaft.
[FIG. 8] A schematic cross-sectional view showing outlines of a circulation groove forming process in a method of manufacturing a screw shaft according to a second embodiment.

### DESCRIPTION OF EMBODIMENTS

Embodiments of the present invention will be described with reference to the accompanying drawings. In an embodiment, a ball screw 10 is incorporated into various mechanical equipment, such as electric braking systems and automated manual transmissions (AMTs) in vehicles, and positioning devices in machine tools, and is used to convert a rotational motion of a power source such as an electric motor into a linear motion to operate a driven part (operation part). Various types of electric braking systems are applicable, including electro-mechanical brakes (EMBs) that apply braking force via a motor-driven ball screw, and electro-hydraulic brakes (EHBs) that control a hydraulic pressure of a hydraulic brake via a motor-driven ball screw. The ball screw 10 can also be applied to mechanical equipment other than those mentioned above.

In the following description, unless otherwise specified, the axial direction, radial direction, and circumferential direction refer to the direction along a center axis C of the ball screw 10 (a screw shaft 2), the radial direction of the ball screw 10 (the screw shaft 2), and the direction around the center axis C of the ball screw 10 (the screw shaft 2), respectively.

### (First embodiment)

### (Ball screw)

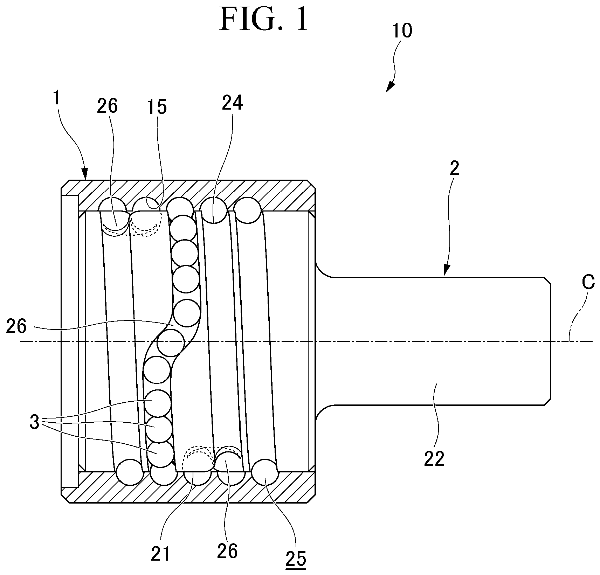

FIG. 1 is a schematic cross-sectional view showing the ball screw 10 according to a first embodiment.

The ball screw 10 is a device configured to convert a rotation motion into a linear motion. As shown in FIG. 1, the ball screw 10 includes a nut 1, the screw shaft 2 (a screw shaft for a ball screw in claims), and a plurality of rolling elements 3 disposed between the nut 1 and the screw shaft 2.

The nut 1 is formed in a cylindrical shape with the center axis C as its axial center. A spiral screw groove (an inner circumferential spiral groove 15) is formed in an inner circumferential surface of the nut 1. In an example, at least a portion of the nut 1 is made of metal. The inner circumferential spiral groove 15 is formed by applying cutting, plastic processing, etc., to the inner circumferential surface of the nut 1. In forming the inner circumferential spiral groove 15, additional grinding can be performed. The cross-sectional shape of the inner circumferential spiral groove 15 is, for example, a Gothic arch or a circular arc, each containing two circular arcs.

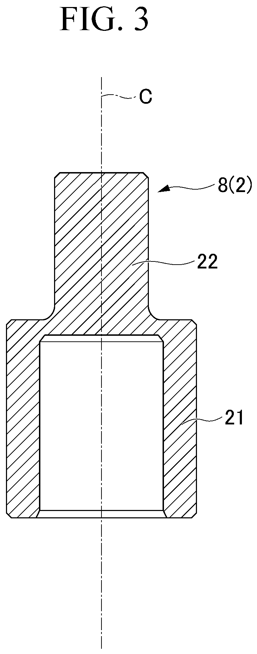

The screw shaft 2 has a shaft body 21, and a small diameter portion 22 arranged next to the shaft body 21 in the axial direction . The shaft body 21 is formed in a cylindrical or columnar shape with the center axis C as its center. The shaft body 21 of this embodiment has a bottomed cylindrical shape with one end closed (see also FIG. 3). A spiral screw groove (an outer circumferential spiral groove 24 (a spiral groove in claims)) is formed in the outer circumferential surface of the shaft body 21. The small diameter portion 22 is connected to the end portion of the shaft body 21 on the side where the bottom portion is provided, in the axial direction. The small diameter portion 22 is formed in a cylindrical shape. The outer diameter dimension of the small diameter portion 22 is smaller than the outer diameter dimension of the shaft body 21. The screw shaft 2 has the shaft body 21 and the small diameter portion 22, which are formed integrally with each other. In an example, at least a portion of the screw shaft 2 is made of metal. The outer circumferential spiral groove 24 is formed by applying cutting, plastic processing, etc., to the outer circumferential surface of the shaft body 21. In forming the outer circumferential spiral groove 24, additional grinding can be performed. The cross-sectional shape of the outer circumferential spiral groove 24 corresponds to the shape of the inner circumferential spiral groove 15 of the nut 1, for example, a Gothic arch or a circular arc.

The plurality of rolling elements 3 are disposed between the nut 1 and the screw shaft 2. The rolling elements 3 are, for example, balls. In an example, the plurality of rolling elements 3 are made of metals (such as steel) or ceramics. When the nut 1 and the screw shaft 2 are assembled, a spiral rolling track 25 is formed by the opposing arrangement of the inner circumferential spiral groove 15 formed on the nut 1 and the outer circumferential spiral groove 24 formed on the screw shaft 2. The rolling elements 3 move within the rolling track 25 in accordance with the relative rotation between the nut 1 and the screw shaft 2.

In addition to the outer circumferential spiral groove 24, a plurality of (four in this embodiment) circulation grooves 26 are formed on the outer circumferential surface of the screw shaft 2. The circulation grooves 26 are integrally formed on the outer circumferential surface of the screw shaft 2 by a manufacturing method described in detail later. The circulation grooves 26 connect one end of the spiral rolling track 25, formed by the nut 1 and the screw shaft 2, to the other end, forming an endless circulation circuit. Then, as the plurality of rolling elements 3 are filled into the endless circulation circuit, the rolling elements 3 circulate endlessly within the endless circulation circuit. When viewed from radially outward from the screw shaft 2, the circulation grooves 26 are formed, for example, in a curved S-shape. The circulation grooves 26 are formed in a U-shape in cross-section, corresponding to the spherical surface of the rolling elements 3, in a cross-sectional view perpendicular to the direction of advance of the rolling elements 3. The maximum depth of the circulation grooves 26 is set to be greater than the maximum depth of the outer circumferential spiral groove 24. For example, the depth of the circulation grooves 26 is set such that, when the nut 1 and the screw shaft 2 are assembled, the rolling elements 3 can climb over screw threads of the nut 1.

The rolling elements 3 move within the rolling track 25, rotate around the screw shaft 2, and reach one end (end point) of the rolling track 25, where they are guided into the circulation grooves 26 from one end portion of the circulation grooves 26. The rolling elements 3, guided by the circulation grooves 26, are pushed by the subsequent rolling elements 3 and move to the other end portion of the circulation grooves 26. Then, the rolling elements 3 are designed to return from the other end portion of the circulation grooves 26 to the other end (start point) of the rolling track 25. The start point and the end point of the rolling track 25 are swapped depending on the relative rotation direction between the nut 1 and the screw shaft 2. In this way, as the nut 1 and the screw shaft 2 rotate relative to each other, the rolling elements 3 can continuously circulate along the circulation route (circulation circuit) including the rolling track 25 and the circulation grooves 26.

### (Method for manufacturing screw shaft for ball screw)

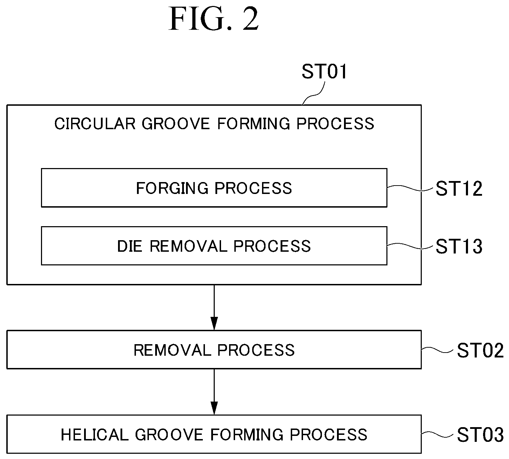

Next, an example of a method of manufacturing the screw shaft 2 for the ball screw 10 described above will be described with reference to FIG. 2 to FIG. 7. FIG. 2 is a flowchart showing a flow of the method of manufacturing the screw shaft 2 for the ball screw according to the first embodiment.

As shown in FIG. 2, the method of manufacturing the screw shaft 2 includes a circulation groove forming process ST01, a removal process ST02, and a spiral groove forming process ST03. The circulation groove forming process ST01 has a forging process ST12, and a mold removal process ST13.

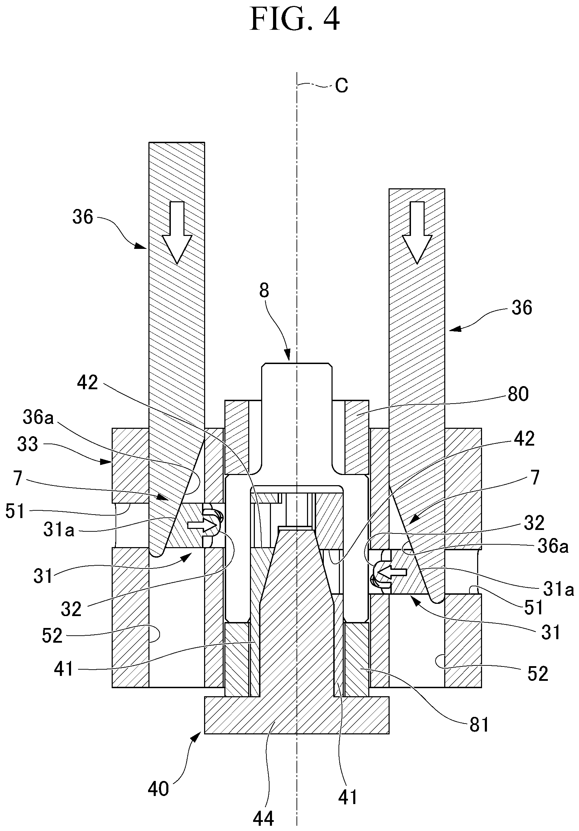

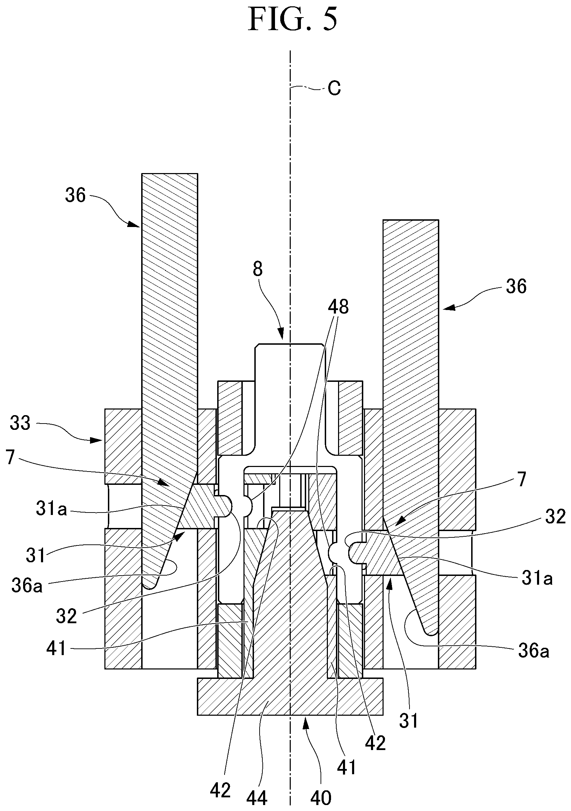

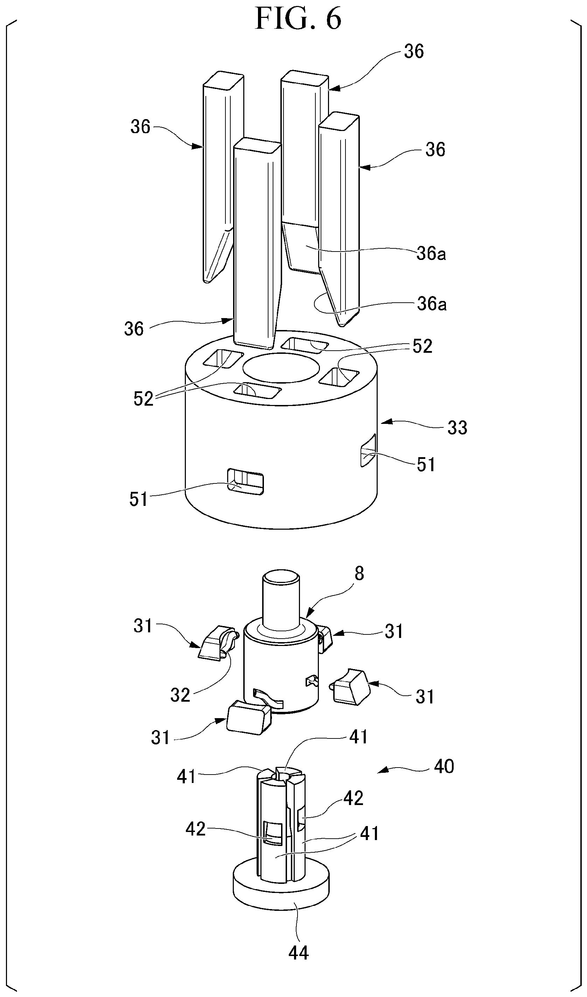

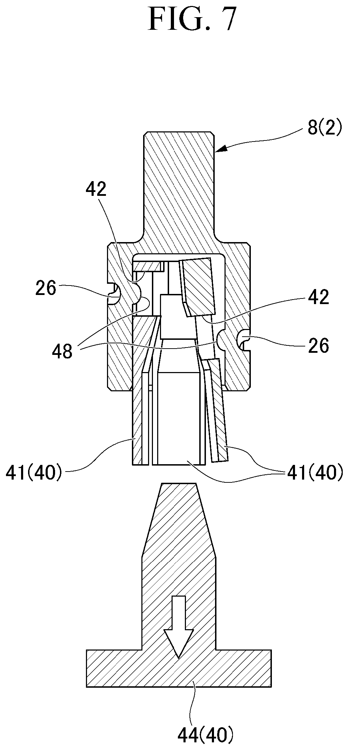

FIG. 3 is a cross-sectional view of a blank 8 of the screw shaft 2 according to the first embodiment. FIG. 4 and FIG. 5 are cross-sectional views showing outlines of the circulation groove forming process ST01 in the method of manufacturing the screw shaft 2. FIG. 4 and FIG. 5 shows outlines of the forging process ST12 in the circulation groove forming process ST01. FIG. 6 is a perspective view showing outlines of the circulation groove forming process ST01 in the method of manufacturing of the screw shaft 2. FIG. 7 is a cross-sectional view showing outlines of the mold removal process ST13 in the method of manufacturing the screw shaft 2.

As shown in FIG. 3, first, the blank 8 of the screw shaft 2, in which only the outer shape of the shaft body 21 and the small diameter portion 22 is formed (the screw shaft 2 in the state before the outer circumferential spiral groove 24 and the circulation grooves 26 are formed) is prepared. The blank 8 of the embodiment is formed in a cylindrical shape with at least a portion in the axial direction (corresponding to the shaft body 21) being hollow. Further, although the screw shaft 2 and the blank 8 described above are essentially the same part, for the sake of description, in the following description, the blank 8 will refer to the part before the circulation grooves 26 and the outer circumferential spiral groove 24 are formed on the outer circumferential surface, and the screw shaft 2 will refer to the part after the circulation grooves 26 and the outer circumferential spiral groove 24 are formed on the outer circumferential surface.

Next, the forging process ST12 is performed. In the forging process ST12, first, the blank 8 is placed into a predetermined die apparatus. As shown in FIG. 4 and FIG. 6, in the embodiment, the die apparatus used in the circulation groove forming process ST01 (the forging process ST12) has a heel block 33, a plurality of punches 31 (a first mold in claims) and a mandrel 36, which are disposed outside the blank 8 in the radial direction, and a second mold 40 disposed inside the blank 8 in the radial direction.

The heel block 33 is formed in a substantially cylindrical shape with the center axis C as its axial center, and the blank 8 is located inside the heel block 33 in the radial direction. The heel block 33 has a plurality of (four in the embodiment) radial through-holes 51 that penetrate the heel block 33 in the radial direction, and a plurality of (four in the embodiment) axial through-holes 52 that penetrate the heel block 33 in the axial direction. The radial through-holes 51 are provided in the same number as the circulation grooves 26 formed in the screw shaft 2 (four in the embodiment). Each of the radial through-holes 51 is located at a different location in the circumferential and axial directions. Specifically, each of the radial through-holes 51 is located to correspond to each of the circulation grooves 26 that may be formed in the blank 8, with the blank 8 located inside the radial direction of the heel block 33. Each of the axial through-holes 52 is located in a circumferential direction corresponding to each of the radial through-holes 51. Accordingly, as shown in FIG. 4, the corresponding radial through-holes 51 and axial through-holes 52 intersect within the heel block 33.

The plurality of punches 31 are inserted into the plurality of radial through-holes 51 from the outside in the radial direction, respectively. In the end portions of the punches 31 that face inward in the radial direction, a convex portion 32 corresponding to the shape of the circulation grooves 26 is formed. The convex portion 32 is pressed against the outer circumferential surface of the blank 8, and its shape is transferred, thereby forming the circulation grooves 26 on the blank 8. The end portions of the punches 31 facing outward in the radial direction have a tapered surface 31a that engages with the mandrel 36, as will be described in more detail later.

The mandrels 36 are inserted into each of the plurality of axial through-holes 52 from one side in the axial direction (from above in FIG. 4). The mandrel 36 extends in the axial direction. A planar tapered surface 36a is formed on the end portion of the mandrel 36 that faces downward in the axial direction (towards the direction of advance in the insertion direction). The tapered surface 36a of the mandrel 36 is formed to have the same inclination angle as the tapered surface 31a of the punches 31. In the embodiment, a cam mechanism 7 is formed by the tapered surface 36a of the mandrel 36 and the tapered surface 31a of the punches 31. The cam mechanism 7 allows the mandrel 36 to be inserted into the axial through-holes 52 of the heel block 33, thereby moving the punches 31 inward in the radial direction (see arrow in FIG. 4).

The second mold 40 has a plurality of (four in the embodiment) split dies 41, and a die base 44. The split dies 41 are provided in the same number as the circulation grooves 26 formed in the screw shaft 2, and are arranged to correspond to each of the circulation grooves 26. On the outer circumferential surface of each split die 41, an escape portion 42 is formed at a position corresponding to each of the circulation grooves 26 of the screw shaft 2, recessed inward in the radial direction. Accordingly, the position of the escape portion 42 differs for each split die 41. Each of the split dies 41 is located such that the outer circumferential surface thereof comes into contact with the inner circumferential surface of the blank 8. The escape portion 42 is formed in a rectangular shape that is slightly larger than the circulation grooves 26 when viewed from the radial direction. Further, the escape portion 42 may be formed in a shape equivalent to the circulation grooves 26 (for example, S-shaped). The size of the escape portion 42 is not limited to the size described above. For example, the escape portion 42 may be slightly smaller or larger than the circulation grooves 26. Alternatively, the escape portion 42 may be formed to be the same size as the circulation grooves 26. The die base 44 is located radially inward from the plurality of split dies 41. The die base 44 regulates the position of each of the split dies 41 and receives the load acting on the split dies 41.

As shown in FIG. 4, the blank 8 is located in the axial direction by being held in the axial direction by a holder 81 and a pressing part 80, which are part of the die apparatus. The holder 81 is located at one end portion of the blank 8 in the axial direction (the lower end portion in FIG. 4) and supports the blank 8. The pressing part 80 is located at the other end portion of the blank 8 in the axial direction (the upper end portion in FIG. 4). The pressing part 80 restricts the movement of the blank 8 in the axial direction by pressing the blank 8 downward in the axial direction. The pressing part 80 may be formed by including, for example, an elastic member such as a rubber material or a spring. As an example, the pressing part 80 may have a rigid body portion that comes into contact with the end surface of the blank 8, and an elastic member (such as a spring) that presses the rigid body portion toward the blank 8. In this case, the pressing part 80 may be configured to press the blank 8 in the axial direction by the elastic force of the elastic member. Alternatively, the pressing part 80 may press the blank 8 in the axial direction by using a hydraulic mechanism instead of the elastic member. In this case, by employing a hydraulic cushion or the like, the pressing part 80 may be made to perform an action that simulates an elastic force.

With the heel block 33, the plurality of punches 31, the mandrel 36, and the second mold 40 located in predetermined locations relative to the blank 8, the mandrel 36 is then inserted into the heel block 33 from one side in the axial direction (the upper side in FIG. 4).

As described above, since the cam mechanism 7 is formed by the tapered surface 36a of the mandrel 36 and the tapered surface 31a of the punches 31, the punches 31 can be moved inward in the radial direction by inserting the mandrel 36 into the heel block 33 from the axial direction.

As shown in FIG. 5, with the tapered surface 36a of the mandrel 36 and the tapered surface 31a of the punches 31 in contact, if the mandrel 36 is further inserted downward in the axial direction, the punches 31 inserted into the radial through-holes 51 will move further inward in the radial direction while deforming the blank 8. The punches 31 press against the outer circumferential surface of the blank 8 by moving inward in the radial direction relative to the blank 8, without moving relative to the blank 8 in the axial direction. Then, by pressing the convex portion 32 of the punches 31 against the outer circumferential surface of the blank 8, the circulation grooves 26, which have the shape of the convex portion 32 transferred to them, are formed on the outer circumferential surface of the blank 8. In other words, in the forging process ST12, the circulation grooves 26 are formed on the outer circumferential surface of the blank 8 by moving the punches 31, which have the convex portion 32 formed on them and corresponding to the concave portion of the circulation grooves 26, from the outside to the inside in the radial direction relative to the blank 8.

In addition, in the forging process ST12, the plurality of mandrels 36 are inserted simultaneously in the axial direction. Accordingly, it is possible to simultaneously form the plurality of circulation grooves 26 on the outer circumferential surface of the blank 8 in a single forging process. As a result of the formation of the circulation grooves 26, a portion of the flown material of the blank 8 flows toward the escape portion 42 of the split dies 41, forming a ridge portion 48 that protrudes toward the inner circumferential side of the shaft body 21 of the screw shaft 2. The ridge portion 48 is removed by the removal processing described later.

Next, the mold removal process ST13 is performed. In the mold removal process ST13, first, the mandrel 36 is moved to the opposite side of the punches 31 to disengage the cam mechanism 7. Then, the punches 31 are removed from the blank 8 by moving the punches 31 outward in the radial direction (in the opposite direction to the arrow in FIG. 4). Next, as shown in FIG. 7, the die base 44 of the second mold 40 is removed from the blank 8 by pulling the die base 44 out in the axial direction. Accordingly, since the split dies 41 can move inward in the radial direction, the split dies 41 are inclined toward the inner diameter to separate the escape portion 42 from the ridge portion 48, and the split dies 41 are also removed by pulling the split dies 41 out in the axial direction. The plurality of split dies 41 are removed in the same manner. Accordingly, the second mold 40 is removed from the inner circumferential portion of the blank 8. Once the mold removal process ST13 is completed, the screw shaft 2 is formed with the plurality of circulation grooves 26 formed on the outer circumferential surface thereof.

Once the circulation groove forming process ST01 is completed, the removal process ST02 is then performed. In the removal process ST02, the removal processing is performed on the inner circumferential surface of the shaft body 21 in the screw shaft 2. In the embodiment, in order to remove irregularities such as the ridge portion 48 (see FIG. 7) created in the circulation groove forming process ST01 described above, cutting is performed on the inner circumferential surface of the shaft body 21. Further, in the removal process ST02, cutting or similar processes may also be performed on the outer circumferential surface of the shaft body 21. In addition, for example, the removal processing other than cutting, such as polishing, may also be performed.

Further, the ridge portion 48 may be left in place if no product or functional problems arise. That is, in the removal process ST02, it is not necessary to remove the ridge portion 48.

Once the removal process ST02 is completed, the spiral groove forming process ST03 is then performed. In the spiral groove forming process ST03, the outer circumferential spiral groove 24 is formed on the outer circumferential surface of the shaft body 21 by the removal processing such as cutting. At this time, the outer circumferential spiral groove 24 is formed such that its inner shape is smaller than that of the circulation grooves 26. Further, the inner shape refers to the size of the cross-sectional shape of the groove (groove depth, cross-sectional area, etc.) in a section perpendicular to the direction of advance of the rolling elements 3 that roll in the circulation grooves 26 or the outer circumferential spiral groove 24. That is, the cross-sectional shape of the outer circumferential spiral groove 24 is smaller than that of the circulation grooves 26. Accordingly, for example, one end of the circulation grooves 26 is connected to a portion of the outer circumferential spiral groove 24, and the other end of the circulation grooves 26 is connected to the other portion of the outer circumferential spiral groove 24.

Through the above-mentioned processes, the screw shaft 2 having the outer circumferential spiral groove 24 and the circulation grooves 26 is formed on the outer circumferential surface. Further, although not described in the above description of the embodiment, for example, a rough molding process to obtain the blank 8 from the base material may be included before the circulation groove forming process ST01. In addition, the method may also separately have an outer circumferential finishing process, which involves performing plastic processing or removal processing on the outer circumferential surface of the small diameter portion 22 of the screw shaft 2 to form gears, flanges, key grooves, spline grooves, etc., on the outer circumferential surface of the small diameter portion 22. A chamfering process may be separately performed to chamfer the boundary between the circulation grooves 26 and the outer circumferential spiral groove 24. After the spiral groove forming process ST03 or the chamfering process, heat treatment processes such as carburizing, carbonitriding, quenching, tempering, high-frequency induction hardening, and the like, may be separately provided.

### (Actions, Effects)

According to the method for manufacturing a screw shaft for a ball screw of the embodiment, by moving the punches 31, which have the convex portion 32 formed thereon and corresponding to the concave portion of the circulation grooves 26, inward in the radial direction without moving them in the axial direction, the convex portion 32 is pressed against the outer circumferential surface of the blank 8 of the screw shaft 2, thereby forming the circulation grooves 26 on the outer circumferential surface of the blank 8. Since the circulation grooves 26 are formed by plastic processing (forging) in this way, the processing time can be shortened and the processability of the screw shaft 2 can be improved compared to the conventional technique of forming the circulation grooves 26 by cutting using an end mill. This allows for keeping manufacturing costs low. In addition, for example, in the related art using the end mill, when the processing position and the rotation center of the end mill coincided with each other, the rotation speed became low, potentially reducing machinability. As a result, there was a risk that the processing accuracy of the circulation grooves 26 would decrease. On the other hand, according to the manufacturing method of the embodiment, regardless of the shape of the circulation grooves 26, the circulation grooves 26 can be formed with high precision.

In addition, in the circulation groove forming process ST01, forging is performed by moving the punches 31 inward in the radial direction without moving them in the axial direction. Accordingly, it is possible to suppress the material of the blank 8 from flowing in the axial direction. Accordingly, this can suppress deformation of the circulation grooves 26 and a decrease in the positional accuracy of the circulation grooves 26 caused by the material flowing in the axial direction. Accordingly, the circulation grooves 26 can be formed with high precision. Further, since no shear force is generated along the axial direction on the convex portion 32 of the punches 31, the mold lifespan can be extended.

Accordingly, compared to the related art, it is possible to provide the method for manufacturing a screw shaft for a ball screw capable of improving processability and processing accuracy when the circulation grooves 26 are formed on the screw shaft 2.

A portion of the blank 8 (the shaft body 21) is formed in a hollow cylindrical shape. In the circulation groove forming process ST01, the circulation grooves 26 are formed by moving the punches 31 inward in the radial direction while the second mold 40 is located inside the shaft body 21 in the radial direction. Accordingly, this can increase the versatility of the screw shaft 2. In addition, by positioning the second mold 40 inside the radial direction of the blank 8, the load from the punches 31 during the formation of the circulation grooves 26 can be received by the second mold 40. Accordingly, processing accuracy of the circulation grooves 26 can be improved.

At positions corresponding to the circulation grooves 26 on the outer circumferential surface of the second mold 40, an escape portion 42 is formed that is recessed inward in the radial direction. Accordingly, the material of the blank 8, extruded by the flow during the formation of the circulation grooves 26, protrudes toward the escape portion 42 (see the ridge portion 48 in FIG. 5). Accordingly, it is possible to suppress the flow of the material in the blank 8 in the axial direction and prevent the shape of the circulation grooves 26 from collapsing. Accordingly, the circulation grooves 26 can be formed with high precision.

The punches 31 are moved inward in the radial direction by the cam mechanism 7, which is formed by the punches 31 and the mandrel 36. Accordingly, the circulation grooves 26 can be easily formed, and the circulation grooves 26 can be formed with high precision.

In the circulation groove forming process ST01, the circulation grooves 26 are formed with the pressing part 80 located at the end portion of the blank 8. The pressing part 80 presses the blank 8 in the axial direction, restricting movement of the blank 8 in the axial direction. Accordingly, the deformation and movement of the blank 8 in the axial direction are suppressed, allowing the circulation grooves 26 to be formed with high precision.

The screw shaft 2 has the plurality of circulation grooves 26, and the plurality of circulation grooves 26 are simultaneously formed in the circulation groove forming process ST01. For example, according to the above-mentioned embodiment, by simultaneously inserting the plurality of mandrels 36 into the heel block 33 along the axial direction, the plurality of punches 31 are simultaneously moved inward in the radial direction and pressed against the blank 8. Accordingly, even if the screw shaft 2 has a plurality of circulation grooves 26, the circulation grooves 26 can be formed easily and quickly. In addition, the positional accuracy of the plurality of circulation grooves 26 can be improved.

### (Second embodiment)

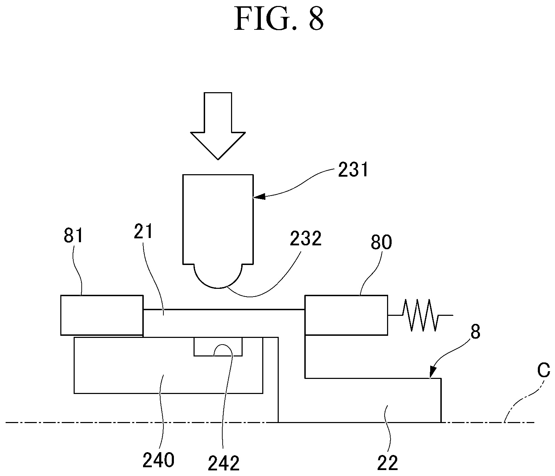

Next, a second embodiment of the present invention will be described. In the description of the second embodiment, for components similar to those in the first embodiment described above, the same reference signs are used, and descriptions thereof will be omitted as appropriate. Further, the specific configuration is not limited to these embodiments and can be modified as appropriate without departing from the spirit of the present invention. FIG. 8 is a schematic cross-sectional view showing outlines of the circulation groove forming process ST01 in the method of manufacturing the screw shaft 2 according to the second embodiment. The second embodiment differs from the first embodiment in that a single punch 231 is used to sequentially form the plurality of circulation grooves 26.

As shown in FIG. 8, in the second embodiment, in the circulation groove forming process ST01, the blank 8 is located so that the axial direction (the center axis C) thereof and the horizontal direction coincide with each other. A second mold 240 is disposed inside the blank 8 in the radial direction. The second mold 240 comes into contact with the inner circumferential surface of the blank 8 (the shaft body 21) at a position corresponding to the location where the circulation grooves 26 are formed by the punch 231. Similar to the first embodiment, the second mold 240 has an escape portion 242 formed at a position corresponding to the circulation grooves 26 that are formed.

The holder 81 and the pressing part 80 are provided on both sides of the shaft body 21 in the axial direction. The configurations of the holder 81 and the pressing part 80 may be the same as those of the holder 81 and the pressing part 80 in the first embodiment. For example, the pressing part 80 may be formed by including an elastic member such as a rubber material or a spring. The blank 8 is held in the axial direction by the holder 81 and the pressing part 80, thereby restricting the movement of the blank 8 in the axial direction.

The punch 231 is located outside the blank 8 in the radial direction. A convex portion 232 is formed on a lower end portion of the punch 231. The punch 231 moves, for example, from top to bottom along the vertical direction. Accordingly, the punch 231 is moved inward in the radial direction without moving in the axial direction of the blank 8, and the circulation grooves 26 are formed by pressing the convex portion 232 against the outer circumferential surface of the blank 8. Once the first forging is completed, the blank 8 is rotated around the center axis C by a predetermined amount of rotation and moved by a predetermined distance in the axial direction. Then, just like the first time, the punch 231 is pressed against the blank 8 to form the second circulation groove 26. This process is repeated multiple times (four times in the embodiment) to sequentially form the plurality of (four in the embodiment) circulation grooves 26 one by one.

According to the manufacturing method of the second embodiment, the same actions and effects of the first embodiment can be exhibited. That is, compared to the related art that forms the circulation grooves 26 by cutting with an end mill, this method shortens processing time and improves the processability and processing accuracy of the circulation grooves 26. In addition, since forging is performed by moving the punch 231 inward in the radial direction without moving the punch 231 in the axial direction, the material of the blank 8 can be prevented from flowing in the axial direction. Accordingly, the circulation grooves 26 can be formed with high precision. Further, it is possible to extend the mold lifespan.

Accordingly, it is possible to provide the method for manufacturing a screw shaft for a ball screw capable of improving processability and processing accuracy when the circulation grooves 26 are formed on the screw shaft 2, compared to the related art.

Further, according to the manufacturing method of the second embodiment, a single punch 231 can be used to form the plurality of circulation grooves 26. Accordingly, it is possible to reduce the number of parts in the die apparatus and prevent the device from becoming larger in the circulation groove forming process ST01. Accordingly, processing costs can be further reduced.

Further, in the second embodiment, the orientation in which the blank 8 is located is not limited to the orientation described above (i.e., the orientation in which the axial direction (the center axis C) of the blank 8 and the horizontal direction coincide with each other). As an example, the blank 8 may be located so that the axial direction (the center axis C) of the blank 8 and the vertical direction coincide with each other.

Further, the technical scope of the present invention is not limited to the above-described embodiments, and various modifications can be made without departing from the spirit of the present invention.

For example, in the first embodiment described above, in the removal process ST02, an example was described in which cutting is performed on the inner circumferential surface and the outer circumferential surface of the screw shaft 2 (the shaft body 21), but this is not limited thereto. In the removal process ST02, removal processing may be performed on at least one of the inner circumferential surface and the outer circumferential surface of the screw shaft 2.

The number of the punches 31 is not limited to four. The number of the punches 31 may be 2, 3, or 5 or more, depending on the number of the circulation grooves 26 formed on the screw shaft 2. Similarly, the number of the mandrels 36 and the number of the split dies 41 may be 2, 3, or 5 or more. The number of the mandrel 36 and the punches 31 may be different from the number of the split dies 41.

In the embodiment described above, although the method of manufacturing the screw shaft 2 having the plurality of circulation grooves 26 has been described, the present invention may also be applied to the manufacturing of the screw shaft 2 having only one circulation groove 26. In this case, for example, only one of the punches 31 or the mandrel 36 may be provided. However, considering the removal of the mold, at least two or more split dies 41 are necessary. For example, two split dies 41 may be prepared, one of which has the escape portion 42, while the other split dies 41 are not formed to have the escape portion 42.

A method other than the cam mechanism 7 may be used to move the punches 31 inward in the radial direction. As an example, methods utilizing hydraulic pressure or atmospheric pressure, methods using a motor and a ball screw, or methods utilizing an elastic force of an elastic body may be used as substitutes for the cam mechanism 7. If the blank 8 is thin-walled, bulge forming (hydroforming) may be used.

The shaft body 21 of the screw shaft 2 may be solid. In this case, in the circulation groove forming process ST01, it is not necessary to provide the second mold 40. If the blank 8 is solid, a ridge portion may be formed that protrudes outward in the radial direction. Accordingly, it is preferable to provide a gap of an appropriate size between the inner circumferential surface of the heel block 33 and the outer circumferential surface of the blank 8. Further, in the range where the circulation grooves 26 are not provided in the circumferential direction, the gap between the inner circumferential surface of the heel block 33 and the outer circumferential surface of the blank 8 may be reduced. Accordingly, coaxial alignment between the heel block 33 and the blank 8 can be achieved regardless of the presence or absence of the circulation grooves 26.

The shape of the escape portion 42 is not limited to a rectangular or S shape. However, when the shape of the escape portion 42 is formed to be the same as the shape of the circulation grooves 26 (for example, S-shaped), it has the advantage of making the material less likely to sag during the formation of the circulation grooves 26 and improving the transferability of the circulation grooves 26.

Further, the present disclosure may also be a combination of the following configurations.
(1) A method of manufacturing a screw shaft for a ball screw having a spiral groove along which a plurality of rolling elements roll, and a circulation groove configured to return the rolling elements from one end to the other end of the spiral groove, the method including:
   a circulation groove forming process of forming the circulation groove on an outer circumferential surface of a blank of the screw shaft by moving a first mold, on which a convex portion corresponding to a concave portion of the circulation groove is formed, from outside to inside the blank in a radial direction; and
   a spiral groove forming process of forming the spiral groove on the outer circumferential surface of the blank by removal processing,
   wherein, in the circulation groove forming process, the circulation groove is formed by moving the first mold inward in the radial direction without moving the first mold in the axial direction to press the outer circumferential surface of the blank, and pressing the convex portion against the outer circumferential surface of the blank.
(2) The method for manufacturing a screw shaft for a ball screw according to the above-mentioned (1), wherein the blank is formed in a cylindrical shape with at least a portion thereof being hollow in the axial direction, and
   in the circulation groove forming process, the first mold is moved inward in the radial direction while a second mold is located inside the blank in the radial direction.
(3) The method for manufacturing a screw shaft for a ball screw according to the above-mentioned (2), wherein an escape portion recessed inward in the radial direction is formed at a position on the outer circumferential surface of the second mold corresponding to the circulation groove.
(4) The method for manufacturing a screw shaft for a ball screw according to any one of the above-mentioned (1) to (3), wherein, in the circulation groove forming process, the first mold is moved inward in the radial direction by a cam mechanism formed by the first mold and a third mold inserted along the axial direction of the blank.
(5) The method for manufacturing a screw shaft for a ball screw according to any one of the above-mentioned (1) to (4), wherein, in the circulation groove forming process, the circulation groove is formed by pressing the blank from the axial direction, in a state in which a pressing part configured to restrict the movement of the blank in the axial direction is located therein.
(6) The method of manufacturing a screw shaft for a ball screw according to any one of the above-mentioned (1) to (5), wherein the screw shaft has the plurality of circulation grooves, and
   in the circulation groove forming process, the plurality of circulation grooves are formed simultaneously.
(7) The method for manufacturing a screw shaft for a ball screw according to any one of the above-mentioned (1) to (5), wherein, in the circulation groove forming process, after forming one circulation groove by moving the first mold from the outside to the inside in the radial direction of the blank, the plurality of circulation grooves are formed one by one by changing the relative position of the blank and the first mold with respect to at least one of the axial direction and the circumferential direction of the blank to form another circulation groove.
(8) The method for manufacturing a screw shaft for a ball screw according to any one of the above-mentioned (1) to (7), further including a removal process of performing removal processing on at least one of the inner circumferential surface and the outer circumferential surface of the screw shaft, after the circulation groove forming process.

### REFERENCE SIGNS LIST

2 Screw shaft
3 Rolling elements
7 Cam mechanism
8 Blank
10 Ball screw
24 Outer circumferential spiral groove (spiral groove)
26 Circulation groove
31, 231 Punch (first mold)
32 Convex portion
36 Mandrel (third mold)
40, 240 Second mold
42, 242 Escape portion
80 Pressing part
ST01 Circulation groove forming process
ST02 Removal process
ST03 Spiral groove forming process

## Claims

1. A method of manufacturing a screw shaft for a ball screw having a spiral groove along which a plurality of rolling elements roll, and a circulation groove configured to return the rolling elements from one end to the other end of the spiral groove, the method comprising:
a circulation groove forming process of forming the circulation groove on an outer circumferential surface of a blank of the screw shaft by moving a first mold, on which a convex portion corresponding to a concave portion of the circulation groove is formed, from outside to inside the blank in a radial direction; and
a spiral groove forming process of forming the spiral groove on the outer circumferential surface of the blank by removal processing,
wherein, in the circulation groove forming process, the circulation groove is formed by moving the first mold inward in the radial direction without moving the first mold in the axial direction to press the outer circumferential surface of the blank, and pressing the convex portion against the outer circumferential surface of the blank.

2. The method for manufacturing a screw shaft for a ball screw according to claim 1, wherein the blank is formed in a cylindrical shape with at least a portion thereof being hollow in the axial direction, and
in the circulation groove forming process, the first mold is moved inward in the radial direction while a second mold is located inside the blank in the radial direction.

3. The method for manufacturing a screw shaft for a ball screw according to claim 2, wherein an escape portion recessed inward in the radial direction is formed at a position on the outer circumferential surface of the second mold corresponding to the circulation groove.

4. The method for manufacturing a screw shaft for a ball screw according to any one of claims 1 to 3, wherein, in the circulation groove forming process, the first mold is moved inward in the radial direction by a cam mechanism formed by the first mold and a third mold inserted along the axial direction of the blank.

5. The method for manufacturing a screw shaft for a ball screw according to any one of claims 1 to 4, wherein, in the circulation groove forming process, the circulation groove is formed by pressing the blank from the axial direction, in a state in which a pressing part configured to restrict the movement of the blank in the axial direction is located therein.

6. The method of manufacturing a screw shaft for a ball screw according to any one of claims 1 to 5, wherein the screw shaft has the plurality of circulation grooves, and
in the circulation groove forming process, the plurality of circulation grooves are formed simultaneously.

7. The method for manufacturing a screw shaft for a ball screw according to any one of claims 1 to 5, wherein, in the circulation groove forming process, after forming one circulation groove by moving the first mold from the outside to the inside in the radial direction of the blank, the plurality of circulation grooves are formed one by one by changing the relative position of the blank and the first mold with respect to at least one of the axial direction and the circumferential direction of the blank to form another circulation groove.

8. The method for manufacturing a screw shaft for a ball screw according to any one of claims 1 to 7, further comprising a removal process of performing removal processing on at least one of the inner circumferential surface and the outer circumferential surface of the screw shaft, after the circulation groove forming process.
